# EUROPEAN PATENT APPLICATION

(11) **EP 3 760 400 A1**
(43) Date of publication of application: **06.01.2021**
(21) Application number: 19786061.2
(22) Date of filing: 10.04.2019
(51) Int. Cl.: B27C 9/02, B27B 5/20, B27B 5/29, G05B 19/4093, G05B 19/4097

(54) **TOOL PATH CREATION METHOD, TOOL PATH CREATION DEVICE, TOOL PATH CREATION PROGRAM, AND RECORDING MEDIUM HAVING PROGRAM RECORDED THEREON**

(30) Priority: 11.04.2018 JP 2018076398
(71) Applicant: National University Corporation Chiba University, Chiba-shi, Chiba 263-8522 (JP); Maeda Corporation, Chiyoda-ku, Tokyo 1028151 (JP)
(72) Inventor: HIRASAWA, Gakuhito, Chiba-shi, Chiba 263-8522 (JP); TSUNAKAWA, Takashi, Tokyo 102-8151 (JP); YAMATO, Daisaku, Tokyo 102-8151 (JP)
(74) Representative: Ter Meer Steinmeister & Partner
(86) International application number: PCT/JP2019/015542
(87) International publication number: WO 2019/198734

(57) **Abstract**

Provided is a tool path generating method for processing wood as a processing object by a multi-axis processing machine, including a plane extracting step of extracting at least one plane included in a processing objective region being a region at which the processing object is processable, a plane processing determining step of determining whether or not the plane extracted in the plane extracting step is processable by a disk blade attached to the multi-axis processing machine, a disk blade processing path generating step of generating a processing path for the disk blade on the plane determined as being processable in the plane processing determining step, and a tool path generating step of generating a tool path including the processing path for the disk blade.

## Description

### TECHNICAL FIELD

The present disclosure relates to a tool path generating method for processing wood as a processing object by a multi-axis processing machine, a tool path generating unit, a program for generating a tool path, and a computer-readable recording medium storing the program.

### BACKGROUND

A pre-cut method is widely used in which wood is processed by a machine tool installed in a factory or the like before on-site construction. As described in Patent Document 1, a wood processing system for performing the conventional pre-cut method includes a plurality of processing machines dedicated to respective processes including a cutting machine, an intermediate processing machine, a joint processing machine, and the like arranged in order of processes from an upstream side of a wood processing line, and a plurality of line conveyors arranged on an upstream side and a downstream side of the processing machines and connecting the processing machines in series in order to carry wood into and out of the processing machines. The wood processing system processes wood into a desired shape by sequentially performing necessary processing from a processing machine located upstream of the wood processing line.

In the wood processing system described in Patent Document 1, since the number of types of processing that can be performed by each processing machine is small and the degree of freedom of each processing machine is low, it may be difficult to process wood into a complicated shape or to cope with multi-product small-quantity production. In addition, since the wood processing system described in Patent Document 1 needs to include the plurality of processing machines and the plurality of line conveyors, there may be increase in size, complexity, and cost of the system.

Recently, in view of the problems described above, for example, processing by a multi-axis processing machine such as a machining center of five-axis control as disclosed in Patent Document 2 has been performed. Patent Document 2 discloses a processing data integrated generating unit that generates processing data (NC data) for processing by a machining center. The processing data integrated generating unit generates processing data of a processing tool for milling. The processing data includes a movement path of the processing tool required for milling. The multi-axis processing machine performs milling according to the above processing data.

### Citation List/Patent Literature

Patent Document 1: JP2015-102918A; Patent Document 2: JP5768794B

### SUMMARY

### Technical Problem

There has been a problem that milling takes time to process a processing object into a desired shape due to slow processing speed of milling compared with processing by a disk blade such as a circular saw. To solve this problem, it is conceivable to generate processing data including processing by a disk blade having a high processing speed. However, there has been a problem that it is difficult to generate the processing data including the processing by the disk blade having a blade at a position away from a rotational axis. Therefore, a number of generating methods of processing data by milling have been devised, and commercial systems for generating the processing data have been sufficiently prepared. However, there has been a problem that a generating method of processing data by a disk blade is practically insufficient.

In view of the above-described circumstances, it is an object of at least one embodiment of the present invention to provide a tool path generating method for generating a tool path capable of improving processing speed of a processing object by a multi-axis processing machine. Solution to Problem
(1) A tool path generating method according to at least one embodiment of the present invention is a tool path generating method for processing wood as a processing object by a multi-axis processing machine, including a plane extracting step of extracting at least one plane included in a processing objective region being a region at which the processing object is processable, a plane processing determining step of determining whether or not the plane extracted in the plane extracting step is processable by a disk blade attached to the multi-axis processing machine, a disk blade processing path generating step of generating a processing path for the disk blade on the plane determined as being processable in the plane processing determining step, and a tool path generating step of generating a tool path including the processing path for the disk blade.

The present inventors have focused on the fact that it is easy to generate a processing path for a disk blade by limiting processing by a disk blade attached to a multi-axis processing machine to processing for forming planes.

According to the method described above as (1), in the plane processing determining step, it is determined whether or not the plane extracted from the processing objective region in the plane extracting step can be processed by the disk blade attached to the multi-axis processing machine. The plane determined to be processable by the disk blade is specified to be processed by the disk blade, and the processing path for the disk blade of the plane is generated in the disk blade processing path generating step. In the tool path generating step, the tool path including the processing path for the disk blade is generated by combining, for example, the processing path for the disk blade with the other processing paths and the movement path.

Here, processing by the disk blade can be performed in a shorter period of time than the processing by other processing tools such as milling by an end mill. The multi-axis processing machine that performs processing according to the tool path performs, by the disk blade, processing of a plane that can be processed by the disk blade, and thus can improve the processing speed of the processing object as a whole. Therefore, according to the method described above as (1), it is possible to generate the tool path capable of improving the processing speed of the processing object by the multi-axis processing machine.

(2) In some embodiments, in the tool path generating method described above as (1), in the plane processing determining step, the disk blade is determined to be incapable of performing processing when a semi-plane on which a trajectory of the disk blade is assumed and a boundary of which is a trajectory of an outer peripheral edge of the disk blade is in contact with a processing prohibited region in which processing of the processing object is prohibited, and the disk blade is determined to be capable of performing processing when the semi-plane is not in contact with the processing prohibited region.

When the semi-plane on which a trajectory of the disk blade is assumed is in contact with the processing prohibited region, the processing prohibited region is processed by the disk blade, which is not appropriate processing. On the other hand, when the semi-plane is not in contact with the processing prohibited region, the disk blade can process the plane extracted from the processing objective region without damaging the processing prohibited region, which is appropriate processing. According to the method described above as (2), it is possible to easily determine whether or not the plane extracted from the processing objective region can be processed by the disk blade, based on whether or not the semi-plane is in contact with the processing prohibited region.

(3) In some embodiments, in the tool path generating method described above as (2), the trajectory of the disk blade includes a trajectory formed when the disk blade is moved along a direction intersecting an axis of the disk blade.

According to the method described above as (3), owing to that movement (trajectory) of the disk blade during processing is set to linear movement (trajectory) along a direction intersecting the axial of the disk blade, it is possible to simplify the shape of the semi-plane on which the trajectory of the disk blade is assumed. Accordingly, it is easy to determine whether or not the semi-plane is in contact with the processing prohibited region. Further, by making the trajectory of the disk blade simple, generating the processing path for the disk blade of the plane is facilitated.

(4) In some embodiments, in the tool path generating method described above as any one of (1) to (3), the method further includes a processing model specifying step of specifying one processing model out of a plurality of previously-prepared processing models based on at least two kinds of data out of shape data of the processing object before processing, shape data of the processing object after processing, and processing shape data being difference between the shape data after processing and the shape data before processing. Here, in the tool path generating step, the tool path is generated in accordance with processing procedure of the processing model specified in the processing model specifying step.

According to the method described above as (4), in the processing model specifying step, for example, the outer contour of the processing objective region (processing shape) or the like is specified from the before-processing shape data, the after-processing shape data, and the processing shape data of the processing object, and one processing model most similar to the processing shape can be specified from the plurality of processing models. By generating the tool path according to the processing procedure of the processing model, it is not necessary to determine the processing procedure for each processing shape, and thus the tool path can be easily generated.

(5) In some embodiments, in the tool path generating method described above as any one of (1) to (4), the plane defining an outline of the processing objective region is extracted in the plane extracting step.

According to the method described above as (5), in the plane extracting step, the plane to be extracted is limited to the plane constituting the contour of the processing objective region, so that the extraction of the plane in the plane extracting step is facilitated. Accordingly, the generation of the processing path by the disk blade can be further facilitated.

(6) In some embodiments, in the tool path generating method described above as any one of (1) to (5), the multi-axis processing machine includes a multi-axis robot having six or more rotational axes.

Since the disk blade attached to the multi-axis robot having six or more rotational axes has a high degree of freedom, it is difficult to generate the processing path by the disk blade and the tool path including the processing path. According to the method described above as (6), as described above, the processing by the disk blade attached to the multi-axis robot is limited to the processing for forming the plane, so that the processing path of the disk blade and the tool path including the processing path can be easily generated.

(7) A tool path generating unit according to at least one embodiment of the present invention is a tool path generating unit for processing wood as a processing object by a multi-axis processing machine, including a plane processing determining portion determining whether or not at least one plane included in a processing objective region being a region at which the processing object is processable is processable by a disk blade attached to the multi-axis processing machine, and a tool path generating portion generating a processing path for the disk blade and generating a tool path including the processing path for the disk blade on the plane determined as being processable by the plane processing determining portion.

According to the configuration described above as (7), the tool path generating unit determines, by the plane processing determining unit, whether or not the plane included in the processing objective region can be processed by the disk blade attached to the multi-axis processing machine. The tool path generating unit specifies that the disk blade processable plane, which is a plane determined to be processable by the disk blade, is to be processed by the disk blade, and generates the processing path for the disk blade of the plane. Then, the tool path generating unit generates the tool path including the processing path for the disk blade.

The multi-axis processing machine that performs processing according to the tool path performs processing of a plane that can be processed by the disk blade by the disk blade, and thus can improve the processing speed of the processing object as a whole. Therefore, according to the configuration described above as (7), the tool path generating unit can generate the tool path capable of improving the processing speed of the processing object by the multi-axis processing machine.

(8) A computer-readable recording medium storing a program according to at least one embodiment of the present invention is a computer-readable recording medium storing a program for generating a tool path for processing wood as a processing object by a multi-axis processing machine, the program causing a computer to execute a plane processing determining function of determining whether or not at least one plane included in a processing objective region being a region at which the processing object is processable is processable by a disk blade attached to the multi-axis processing machine, and a tool path generating function of generating a processing path for the disk blade and generating a tool path including the processing path for the disk blade on the plane determined as being processable by the plane processing determining function.

According to the configuration described above as (8), the computer that has read the program from the recording medium determines, with the plane processing determining function, whether or not the plane included in the processing objective region can be processed by the disk blade attached to the multi-axis processing machine. Then, the computer specifies that the disk blade processable plane determined to be processable by the disk blade is to be processed by the disk blade and generates the processing path for the disk blade of the disk blade processable plane, with the tool path generating function. Further, the computer generates the tool path including the processing path for the disk blade with the tool path generating function.

The multi-axis processing machine for performing processing according to the tool path performs, by the disk blade, processing of the plane that can be processed by the disk blade, and thus can improve the processing speed of the processing object as a whole. Therefore, according to the configuration described above as (8), the computer that has read the program from the recording medium can generate the tool path capable of improving the processing speed of the processing object by the multi-axis processing machine.

(9) A program according to at least one embodiment of the present invention is a program for generating a tool path for processing wood as a processing object by a multi-axis processing machine, the program causing a computer to execute a plane processing determining function of determining whether or not at least one plane included in a processing objective region being a region at which the processing object is processable is processable by a disk blade attached to the multi-axis processing machine, and a tool path generating function of generating a processing path for the disk blade and generating a tool path including the processing path for the disk blade on the plane determined as being processable by the plane processing determining function.

According to the configuration described above as (9), the computer that has read the program determines, with the plane processing determining function, whether or not the plane included in the processing objective region can be processed by the disk blade attached to the multi-axis processing machine. Then, the computer specifies that the disk blade processable plane determined to be processable by the disk blade is to be processed by the disk blade and generates the processing path of the disk blade processable plane by the disk blade, with the tool path generating function. Further, the computer generates the tool path including the processing path for the disk blade with the tool path generating function.

The multi-axis processing machine for performing processing according to the tool path performs, by the disk blade, processing of the plane that can be processed by the disk blade, and thus can improve the processing speed of the processing object as a whole. Therefore, according to the configuration described above as (9), the computer that has read the program can generate the tool path capable of improving the processing speed of the processing object by the multi-axis processing machine.

### Advantageous Effects

According to at least one embodiment of the present invention, there is provided a tool path generating method for generating a tool path capable of improving processing speed of a processing object by a multi-axis processing machine.

### BRIEF DESCRIPTION OF DRAWINGS

FIG. 1 is a schematic configuration diagram for explaining a processing system including a tool path generating unit according to an embodiment.
FIG. 2 is a schematic configuration diagram illustrating a configuration of a tool path generating unit and a database according to an embodiment.
FIG. 3 is a schematic perspective view of a multi-axis robot (multi-articulated robot) according to an embodiment.
FIG. 4A is a diagram for explaining a processing unit to be attached to a multi-axis robot (multi-articulated robot), the processing unit including a disk blade.
FIG. 4B is a diagram for explaining a processing unit to be attached to a multi-axis robot (multi-articulated robot), the processing unit including a square chisel.
FIG. 4C is a diagram for explaining a processing unit to be attached to a multi-axis robot (multi-articulated robot), the processing unit including a router.
FIG. 4D is a diagram for explaining a processing unit to be attached to a multi-axis robot (multi-articulated robot), the processing unit including a vibration chisel.
FIG. 5 is a flowchart of a tool path generating method according to an embodiment.
FIG. 6A is a diagram for explaining a processing objective region of a processing object as a schematic perspective view of the processing object illustrating both the processing objective region and a processing prohibited region.
FIG. 6B is a diagram for explaining a processing objective region of a processing object as a schematic perspective view of the processing object illustrating the processing objective region divided into a region that can be processed by a disk blade and a region that cannot be processed by a disk blade.
FIG. 7 is a diagram for explaining a processing path for each processing tool, where part (a) of

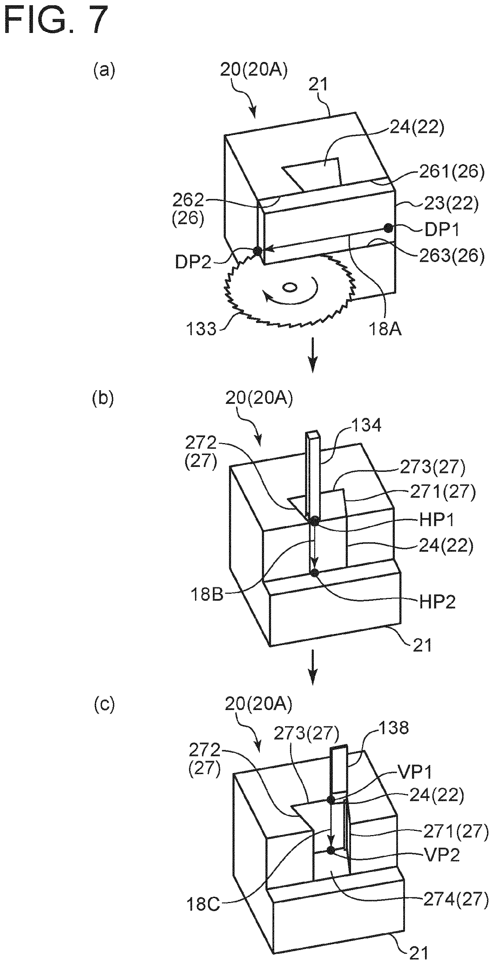

FIG. 7 is for a disk blade, part (b) of FIG. 7 is for a square chisel, and part (c) of FIG. 7 is for a vibration chisel.

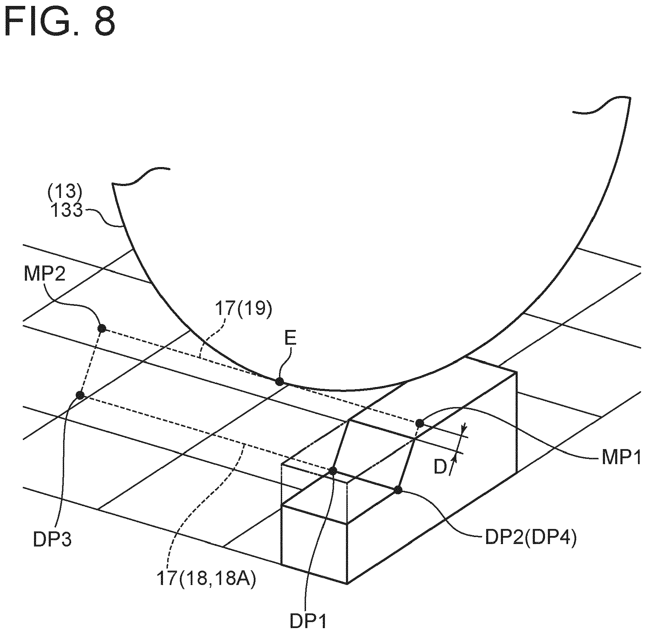

FIG. 8 is a diagram for explaining a start point and an end point of a processing path and a start point and an end point of a movement path.

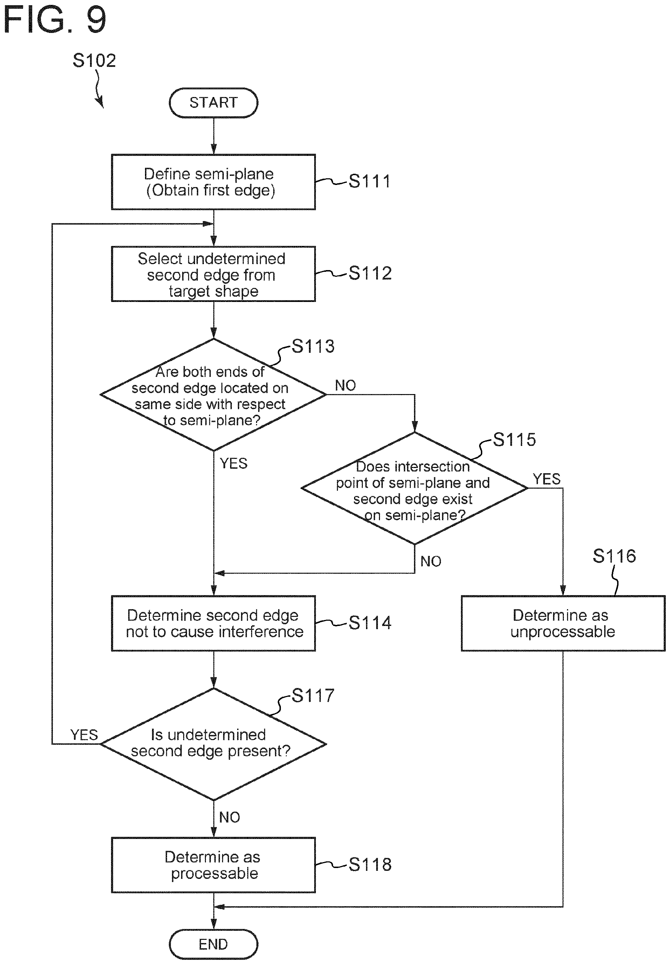

FIG. 9 is a flowchart of a plane processing determining step in an embodiment.

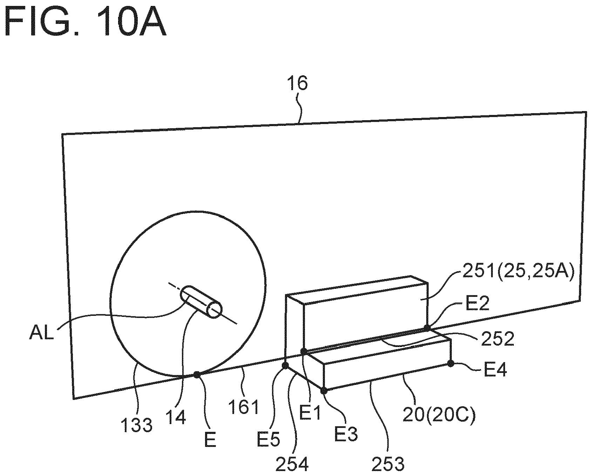

FIG. 10A is a diagram for explaining the plane processing determining step illustrated in FIG. 9 as illustrating an example of being determined to be processable.

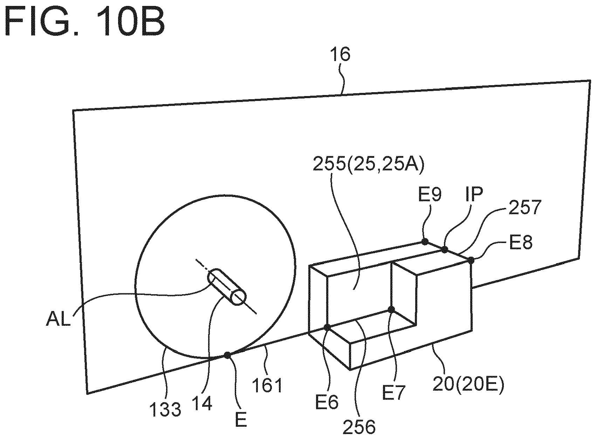

FIG. 10B is a diagram for explaining the plane processing determining step illustrated in FIG. 9 as illustrating an example of being determined to be unprocessable.

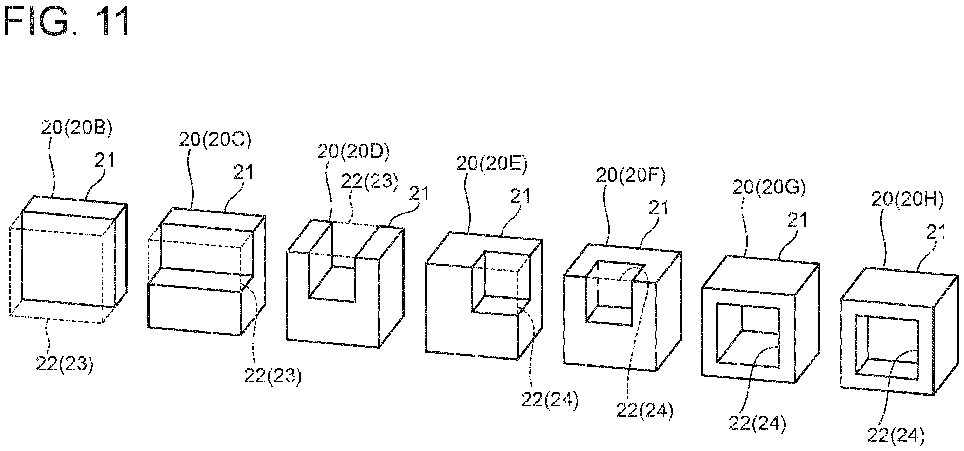

FIG. 11 is a diagram for explaining a shape that can be processed by a disk blade as illustrating both a shape that can be processed by a disk blade and a shape that cannot be processed by a disk blade.

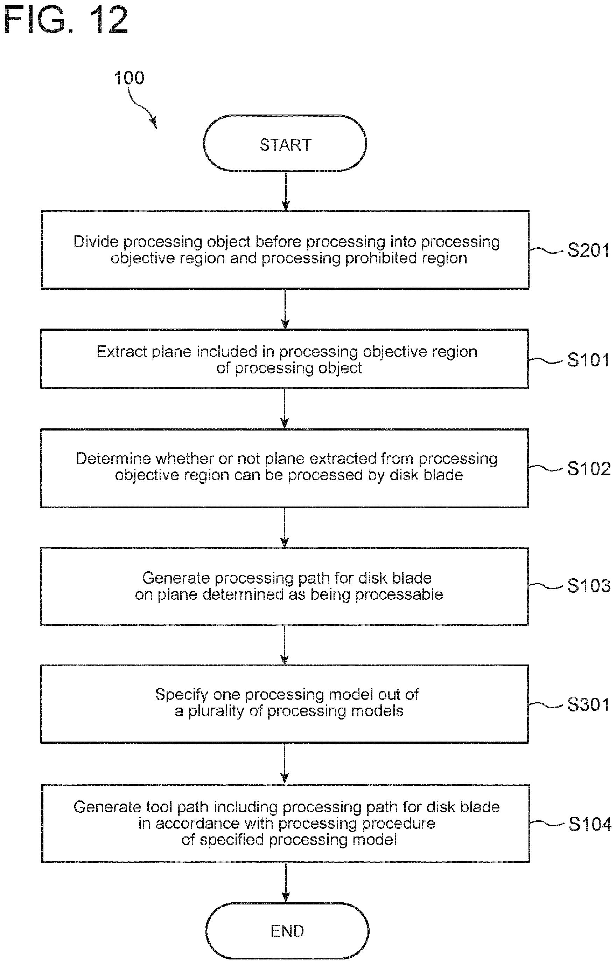

FIG. 12 is a flowchart of a tool path generating method according to an embodiment as the flowchart of the tool path generating method including a region dividing step and a processing model specifying step.

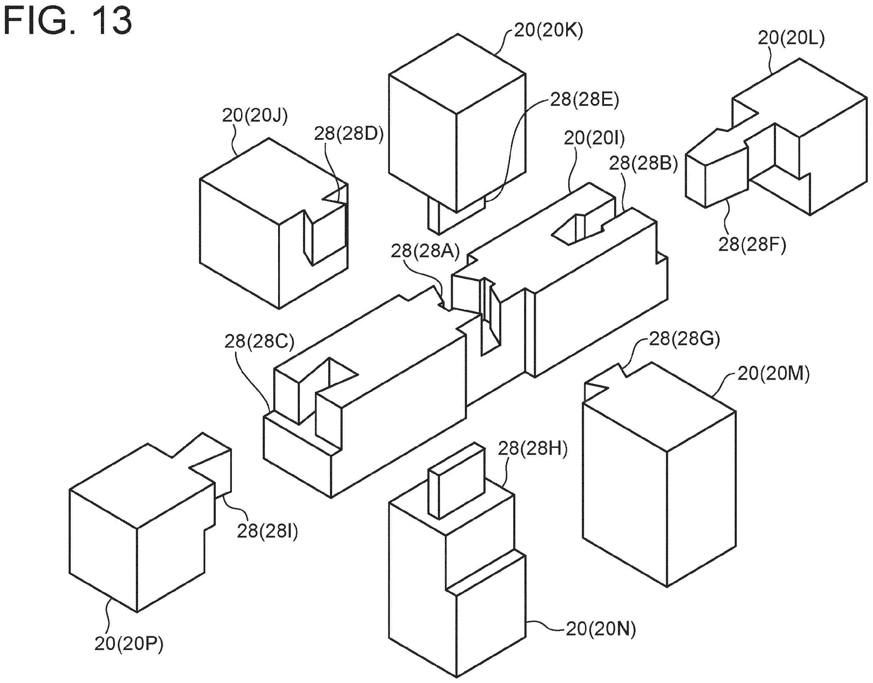

FIG. 13 is a diagram for explaining a processing model as a schematic perspective view of a processing object on which a joint shape and a connection shape are formed.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

For example, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For example, an expression of an equal state such as "same", "equal" and "uniform" shall not be construed as indicating only the state in which the feature is strictly equal, but also includes a state in which there is a tolerance or a difference that can still achieve the same function.

Further, for example, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

Note that the same components are denoted by the same reference numerals, and description thereof may be omitted.

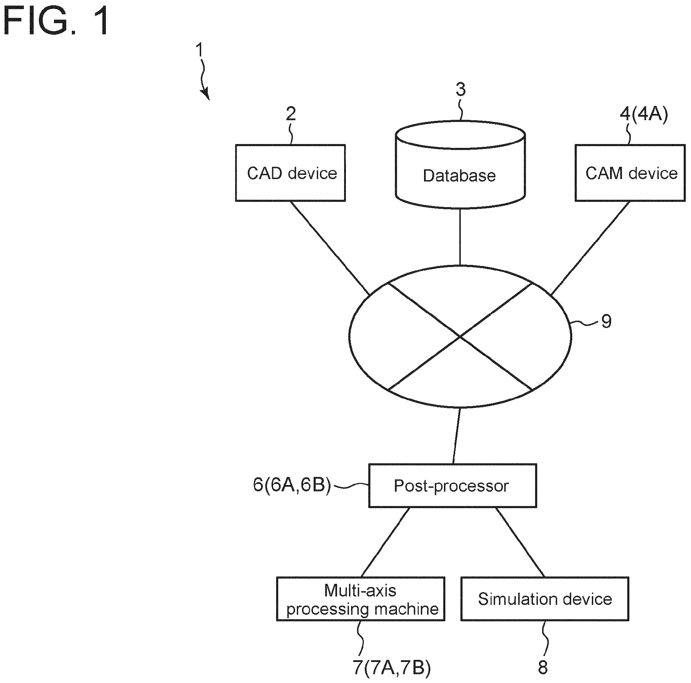

First, a tool path generating unit capable of executing a tool path generating method and a processing system including the tool path generating unit will be described. FIG. 1 is a schematic configuration diagram for explaining a configuration of a processing system including a tool path generating unit according to an embodiment. The "tool path" is a path of movement that a processing tool (the tip of the processing tool) follows when a processing object is processed by a multi-axis processing tool.

As illustrated in FIG. 1, a processing system 1 according to some embodiments includes a CAD device 2 capable of generating, processing, and displaying CAD data, a database 3 capable of storing the CAD data generated and processed by the CAD device 2, a tool path generating unit 4 capable of generating a tool path 17 (tool path data) based on the CAD data transmitted from the CAD device 2 or the database 3, and a multi-axis processing machine 7 capable of processing wood, which is a processing object 20, using a processing tool 13 based on the tool path 17 generated by the tool path generating unit 4. The tool path generating unit 4 includes a CAM device 4A as illustrated in FIG. 1. In some embodiments, the multi-axis processing machine 7 has a total of four or more control axes including linear axes and rotational axes. Preferably, the multi-axis processing machine 7 has five or more control axes. More preferably, the multi-axis processing machine 7 has six or more control axes.

The CAD device 2, the database 3, the CAM device 4A, and the multi-axis processing machine 7 are configured to be capable of communicating electrically with each other. In the embodiment illustrated in FIG. 1, the CAD device 2, the database 3, the CAM device 4A, and the multi-axis processing machine 7 are connected to each other through a network 9 such as a LAN. In addition, the CAD device 2, the database 3, the CAM device 4A, and the multi-axis processing machine 7 are arranged close to each other or in remote locations. Further, the number of each of the CAD device 2, the database 3, the CAM device 4A, and the multi-axis processing machine 7 is one or more.

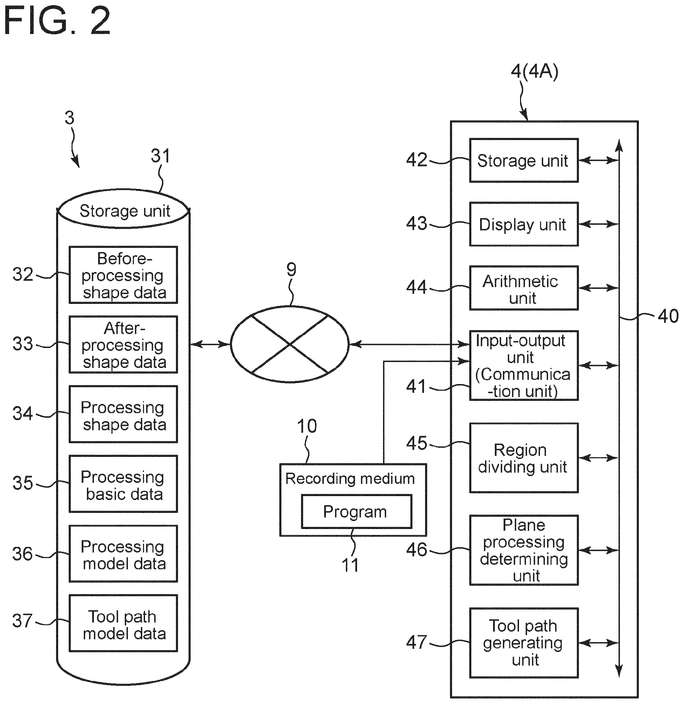

In the embodiment illustrated in FIG. 1, the database 3 is configured such that CAD data generated and processed by the CAD device 2 is transmitted from the CAD device 2 and the CAD data transmitted from the CAD device 2 is stored in a storage unit 31 (see FIG. 2) described later. The CAD device 2 includes a 3D CAD device capable of generating, processing, and displaying 3D CAD data, and the CAD data described above includes 3D CAD data.

In the embodiment illustrated in FIG. 1, the CAM device 4A receives CAD data from the CAD device 2 or the database 3, and can generate the tool path 17 based on the received CAD data. The tool path 17 generated by the CAM device 4A is transmitted to the multi-axis processing machine 7, and the multi-axis processing machine 7 can process the processing object 20 by performing an operation according to the tool path 17 transmitted from the CAM device 4A. In the database 3, the tool path 17 generated by the CAM device 4A is transmitted from the CAM device 4A, and the tool path 17 transmitted from the CAM device 4A may be stored in the storage unit 31. The tool path 17 may be transmitted from the database 3 to the multi-axis processing machine 7.

According to the above-described configuration, the CAD device 2, the database 3, the CAM device 4A, and the multi-axis processing machine 7 are configured to be capable of communicating electrically with each other. Therefore, for example, the CAM device 4A can generate the tool path 17 based on the CAD data designed by the CAD device 2 at a remote location. Further, the multi-axis processing machine 7 can process the processing object 20 based on the tool path 17 generated by the CAM device 4A at the remote location.

In some embodiments, as illustrated in FIG. 1, the processing system 1 described above further includes a post-processor 6 capable of converting a language of the tool path 17 into a language of the multi-axis processing machine 7. When the multi-axis processing machine 7 includes a multi-axis robot 7A capable of operating in a robot language or a G language, the post-processor 6 (6A) converts the language of the tool path 17 into the robot language or the G language recognizable by a controller 78 of the multi-axis robot 7A. Further, when the multi-axis processing machine 7 includes an NC machine tool 7B capable of operating with an NC code, the post-processor 6 (6B) converts the language of the tool path 17 into the NC code. The post-processor 6 is configured to be electrically communicable with each of the CAD device 2, the database 3, the CAM device 4A, and the multi-axis processing machine 7 via the network 9 such as a network LAN. Then, the post-processor 6 converts the language of the tool path 17 transmitted from the database 3 or the CAM device 4A, and transmits the tool path 17, the language of which has been converted, to the multi-axis processing machine 7. In this case, even if the language of the tool path 17 is different from the language in which the multi-axis processing machine 7 can be controlled, the multi-axis processing machine 7 can be operated according to the tool path 17 by converting the language by the post-processor 6.

In some embodiments, as illustrated in FIG. 1, the processing system 1 described above further includes a simulation device 8 capable of simulating the operation of a processing tool 13 or the multi-axis processing machine 7 (multi-axis robot 7A, NC machine tool 7B) attached with the processing tool 13 along the tool path 17. The simulation device 8 is configured to be capable of displaying, on a display portion (such as a display unit 43 to be described later), the operation according to the tool path 17 by the processing tool 13 and the multi-axis processing machine 7 represented on a virtual space. The simulation device 8 is configured to be capable of communicating electrically with each of the CAD device 2, the database 3, the CAM device 4A, the post-processor 6, and the multi-axis processing machine 7 via the network 9 such as a network LAN. Then, the simulation device 8 simulates the operation of the multi-axis processing machine 7 according to the tool path 17 transmitted from the database 3 or the CAM device 4A, and transmits the simulation result to the database 3 or the CAM device 4A. Therefore, the operator of the simulation device 8 can grasp, before the operation of the multi-axis processing machine 7, whether or not the processing tool 13 and the multi-axis processing machine 7 come into contact with each other and whether or not the processing tool 13 and the multi-axis processing machine 7 come into contact with another device or equipment such as a fixing unit (not illustrated) for fixing the processing object 20. Thus, being provided with the simulation device 8, the above-described processing system 1 ensures validity of the tool path 17 and safety with the multi-axis processing machine 7.

FIG. 2 is a schematic configuration diagram illustrating configurations of a tool path generating unit and a database according to an embodiment. In some embodiments, as illustrated in FIG. 2, the database 3 described above has the storage unit 31 for storing before-processing shape data 32, after-processing shape data 33, processing shape data 34, and processing basic data 35.

The before-processing shape data 32 includes information on a shape (material shape) of the processing object 20 before processing by the multi-axis processing machine 7, and includes, for example, three-dimensional CAD data on the shape before processing and coordinate data representing the three-dimensional CAD data in a predetermined fixed coordinate system. The before-processing shape data 32 may be generated, for example, by the CAD device 2 or acquired by laser scanning or photographing the processing object 20.

The after-processing shape data 33 includes information on a shape (finished product shape) of the processing object 20 after processing by the multi-axis processing machine 7, and includes, for example, three-dimensional CAD data relating to the after-processing shape and coordinate data representing the three-dimensional CAD data in the predetermined fixed coordinate system. The after-processing shape data 33 is generated by, for example, the CAD device 2.

The processing shape data 34 includes information on a processing shape being a shape of a portion of the processing object 20 to be removed from the processing object 20 through processing by the multi-axis processing machine 7, and includes, for example, three-dimensional CAD data on the processing shape and coordinate data representing the three-dimensional CAD data in the predetermined fixed coordinate system. The processing shape data 34 is generated by, for example, the CAD device 2.

The processing shape data 34 is difference data between the after-processing shape data 33 and the before-processing shape data 32, and thus can be calculated from the before-processing shape data 32 and the after-processing shape data 33. Further, the before-processing shape data 32 can be calculated from the after-processing shape data 33 and the processing shape data 34. Further, the after-processing shape data 33 can be calculated from the before-processing shape data 32 and the processing shape data 34. That is, two kinds of data out of the before-processing shape data 32, the after-processing shape data 33, and the processing shape data 34 may be stored in the storage unit 31, and the remaining one kind of data may be calculated from the two kinds of data stored in the storage unit 31.

The processing basic data 35 includes information necessary for generating the tool path 17. The processing basic data 35 includes information related to each multi-axis processing machine 7, information related to the processing tool 13 and a processing unit 130 attached to the multi-axis processing machine 7, and information related to an interfering object interfering with the multi-axis processing machine 7 and the processing tool 13, such as a fixing unit for fixing the processing object 20, included in a movable range of the multi-axis processing machine 7. Such information includes the moving speed of the multi-axis processing machine 7, the processing speed of the processing tool 13, the shape and position of the multi-axis processing machine 7 and the processing tool 13, the coordinate system , and the like.

As illustrated in FIG. 2, the tool path generating unit 4 described above (CAM device 4A) is configured of a microcomputer including an input-output unit 41 (input-output interface, communication unit), a storage unit 42 (ROM, RAM), the display unit 43 (display), and an arithmetic unit 44. Here, the general configuration and control will be omitted as appropriate. Each of the input-output unit 41, the storage unit 42, the display unit 43, and the arithmetic unit 44 of the tool path generating unit 4 is electrically connected to a bus 40. Here, "electrically connected" includes not only wired physical connection but also wireless communication, and refers to a configuration in which signals, data, and the like can be transmitted and received between connected devices.

The input-output unit 41 of the tool path generating unit 4 receives various kinds of information from the components (such as the database 3) used in the processing system 1 and outputs various kinds of information based on calculation results and the like to each of the above-described components. The input-output unit 41 includes a keyboard, a mouse, a wireless communication unit, and the like. The storage unit 42 is configured to be capable of storing various kinds of input information, various programs necessary for execution of control, calculation results, and the like. The arithmetic unit 44 performs arithmetic processing based on the various kinds of information described above. The display unit 43 displays various kinds of input information and information such as calculation results by the above-described arithmetic unit 44.

The tool path generating unit 4 further includes a plane processing determining unit 46 (plane processing determining portion, plane processing determining function) capable of determining whether or not at least one plane 25 included in a processing objective region 22 being a region at which the processing object 20 before processing is processable is processable by a disk blade 133 attached to the multi-axis processing machine 7, and a tool path generating unit 47 (tool path generating portion, tool path generating function) capable of generating a processing path 18 (disk blade processing path 18A) by the disk blade 133 and generating the tool path 17 including the disk blade processing path 18A on the plane (disk blade processable plane 26) determined as being processable by the plane processing determining unit 46. In the embodiment illustrated in FIG. 2, the plane processing determining unit 46 and the tool path generating unit 47 are electrically connected to the bus 40. Here, the plane processing determining unit 46 and the tool path generating unit 47 may be a program 11 that is installed in the tool path generating unit 4, stored in the storage unit 42, and operated by the arithmetic unit 44. The program 11 may be a program 11 that is stored in another device of the tool path generating unit 4 and runs on the tool path generating unit 4 via the network 9. Further, the program 11 may be stored in a computer-readable recording medium 10 (see FIG. 2), such as an HDD and an SD card, the recording medium 10 being electrically connected to the tool path generating unit 4 via the input-output unit 41.

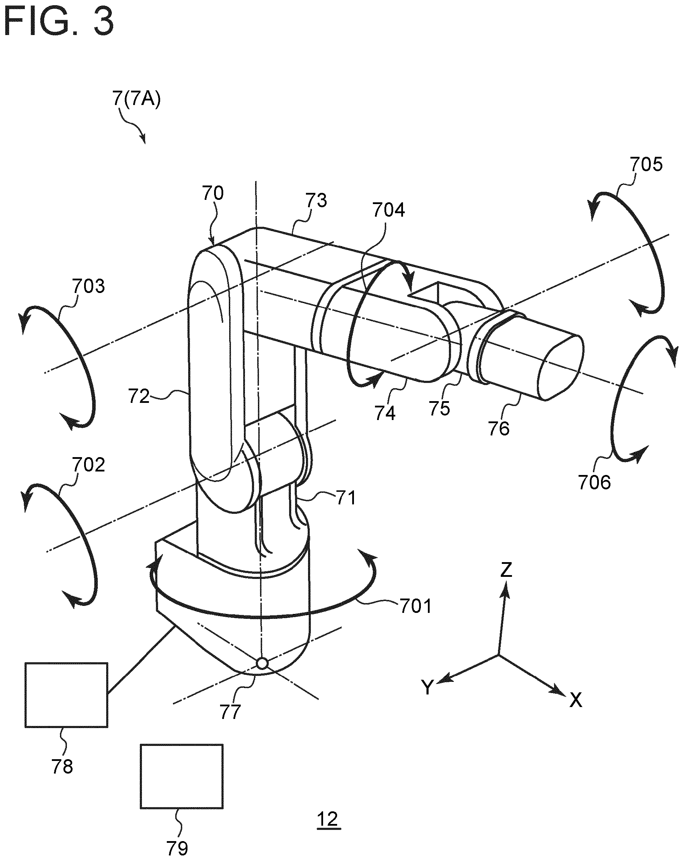

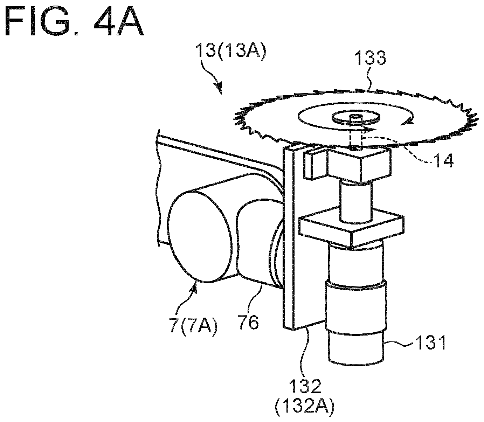

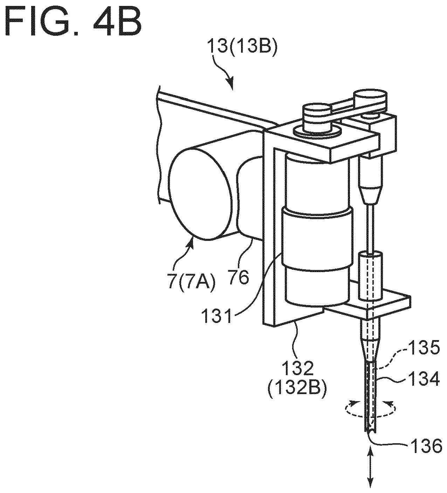

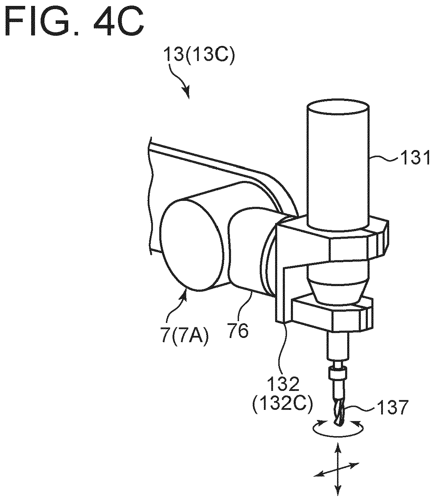

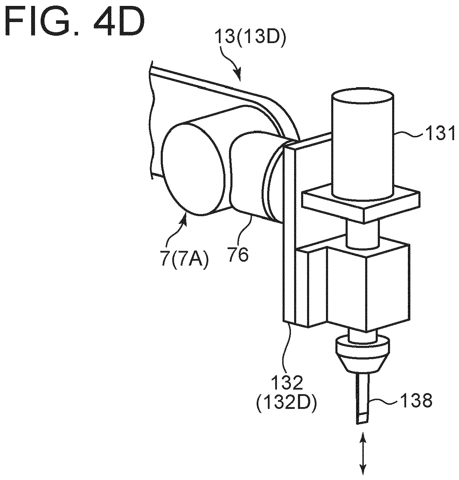

FIG. 3 is a schematic perspective view of a multi-axis robot (multi-articulated robot) in an embodiment. FIG. 4 is a diagram for explaining a processing unit attached to the multi-axis robot (multi-articulated robot). FIG. 4A illustrates a processing unit including a disk blade, FIG. 4B illustrates a processing unit including a square chisel, FIG. 4C illustrates a processing unit including a router, and FIG. 4D illustrates a processing unit including a vibration chisel. The multi-axis robot 7A processes the processing object 20 by the processing tool 13 attached to the multi-axis robot 7A.

The multi-axis robot 7A includes a multi-articulated robot. That is, in the embodiment illustrated in FIG. 3, the multi-axis robot 7A is the multi-articulated robot including a wrist 76, an arm 70 for supporting and moving the wrist 76 and having six or more rotational axes (rotational axes 701 to 706) and five articulated portions (articulated portions 71 to 75), and a robot base 77 supporting the arm 70 and placed on an installation surface 12. The wrist 76 is configured such that the processing unit 130 including the processing tool 13 as illustrated in FIGs. 4A to 4D is detachably attachable.

The multi-axis robot 7A further includes a drive unit including six or more servomotors (not illustrated). The drive unit drives the servomotors to move the wrist 76 relative to the processing object 20 along the six or more rotational axes. As illustrated in FIG. 3, the multi-axis robot 7A further includes the controller 78 for controlling components (such as servomotors) constituting the multi-axis robot 7A, and a tool magazine 79 for having the processing unit 130 attached thereto and detached therefrom. The tool magazine 79 is arranged within the movable range of the multi-axis robot 7A. In this case, since the multi-axis robot 7A includes the tool magazine 79 for having the processing unit 130 attached thereto and detached therefrom, the processing unit 130 can be easily replaced, and the processing object 20 can be processed by various processing units 130.

As illustrated in FIGs. 4A to 4D, the processing unit 130 (processing units 130A to 130D) includes the processing tool 13, a drive unit 131 including a motor for driving the processing tool 13, and a holder 132 (holders 132A to 132D) for supporting the processing tool 13 and the drive unit 131 as being attachable to the wrist 76.

As illustrated in FIGs. 4A to 4D, the processing tool 13 includes the disk blade 133, a square chisel 134, a router 137, a vibration chisel 138, and the like. The disk blade 133 and the router 137 are rotationally driven by the drive unit 131 to process the processing object 20. The square chisel 134 includes a drill 135 rotationally driven by the drive unit 131 and a square chisel blade 136 formed in a square tube shape covering the outer periphery of the drill 135 and having a sharp square portion at the tip. Here, the square chisel 134 may include only the square chisel blade 136 without including the drill 135. The vibration chisel 138 processes the processing object 20 by being vibrated by the drive unit 131. Here, the processing tool 13 includes a processing tool other than the illustrated disk blade 133, for example, a processing tool used in wood processing such as a drill.

Such a multi-axis robot 7A can relatively move the processing unit 130 including the processing tool 13 attached to the wrist 76 with respect to the processing object 20 by rotating the wrist 76 along the six or more rotational axes, and can bring the processing tool 13 into contact with an arbitrary point of the processing object 20 at an arbitrary angle. In addition, by replacing the processing tool 13, the multi-axis robot 7A can perform various types of processing and can process the processing object 20 into a complicated shape. Therefore, it is possible to cope with multi-product small-quantity production.

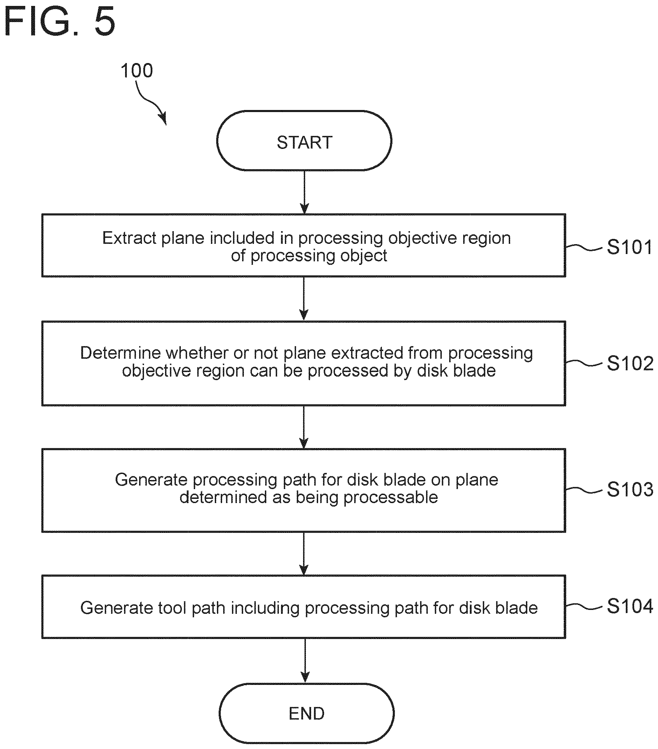

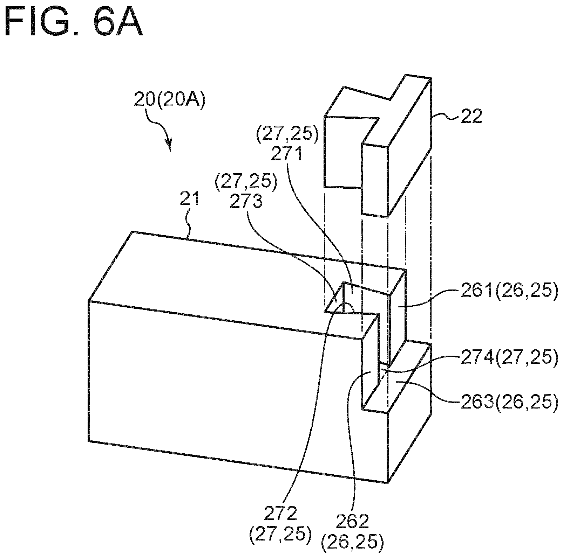

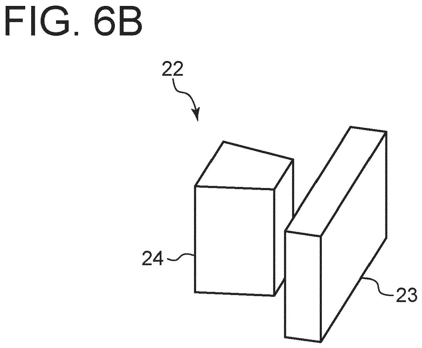

FIG. 5 is a flowchart of a tool path generating method according to an embodiment. FIG. 6 is a diagram for explaining the processing objective region of the processing object. FIG. 6A is a schematic perspective view of the processing object illustrating both the processing objective region and the processing prohibited region, and FIG. 6B is a schematic perspective view illustrating the processing objective region divided into a region that can be processed by a disk blade and a region that cannot be processed by a disk blade. FIG. 7 is a diagram for explaining a processing path for each processing tool, where part (a) of FIG. 7 is for a disk blade, part (b) of FIG. 7 is for a square chisel, and part (c) of FIG. 7 is for a vibration chisel. FIG. 8 is a diagram for explaining a start point and an end point of the processing path and a start point and an end point of a movement path.

A tool path generating method 100 according to some embodiments includes a plane extracting step S101, a plane processing determining step S102, a disk blade processing path generating step S103, and a tool path generating step S104, as illustrated in FIG. 5. The tool path generating method 100 is a method of generating the tool path 17 for processing wood being the processing object 20 by the multi-axis processing machine 7.

In the tool path 17 generated by the tool path generating method 100, processing by the disk blade 133 is prioritized over processing by the other processing tools 13 with respect to the plane (disk blade processable plane 26) that can be processed by the disk blade 133. This is because the processing speed of the processing by the disk blade 133 can be improved as compared with other processing such as milling. Further, this is because the processing by the disk blade 133 can make the surface roughness of the processed flat surface smoother than other processing such as milling, so that the quality of the processing object 20 can be improved.

In the plane extracting step S101, the plane processing determining unit 46 described above extracts at least one plane 25 included in the processing objective region 22 of the processing object 20. Here, as illustrated in FIG. 6A, the processing object 20 (20A) before processing can be divided into the processing prohibited region 21 which is prohibited from being processed by the processing tool 13 and the processing objective region 22 which can be processed by the processing tool 13. The processing prohibited region 21 is a region defined by the outline contour of the finished product shape described above represented by the after-processing shape data 33 as a boundary. The processing objective region 22 is a region defined the outer contour of the processing shape described above represented by the processing shape data 34 as a boundary. Here, before extracting the plane 25 from the processing objective region 22, the above-described plane processing determining unit 46 converts the coordinate system of the processing object 20 into the same coordinate system as that of the multi-axis processing machine 7 or the processing tool 13 based on the above-described processing basic data 35.

In the embodiment illustrated in FIG. 6A, a plane including at least a portion of a boundary surface of the processing objective region 22 with respect to the processing prohibited region 21 is extracted as the plane 25. In other embodiments, it is possible to extract the plane 25 not including the boundary surface.

In the plane processing determining step S102, the plane processing determining unit 46 described above determines whether or not the plane 25 extracted in the plane extracting step S101 can be processed by the disk blade 133 attached to the multi-axis processing machine 7. The determining method will be described later. As illustrated in FIG. 6A, a first plane 261, a second plane 262, and a third plane 263 of the processing object 20A are the disk blade processable planes 26 capable of being processed by the disk blade 133, and a fourth plane 271, a fifth plane 272, a sixth plane 273, and a seventh plane 274 of the processing object 20A are disk blade unprocessable planes 27 incapable of being processed by the disk blade 133. As illustrated in FIG. 6B, the processing objective region 22 is a region processable by the disk blade 133. The processing objective region 22 can be divided into a disk blade processing objective region 23 which is a region removable via processing by the disk blade 133 from the processing objective region 22 and the processing prohibited region 21, and a disk blade processing non-objective region 24 which is a region unprocessable by the disk blade 133.

In the disk blade processing path generating step S103, the tool path generating unit 47 described above generates the processing path 18 (disk blade processing path 18A) for the disk blade 133 on the plane (disk blade processable plane 26) determined as being processable in the plane processing determining step S102. In the embodiment illustrated in FIG. 6A, the tool path generating unit 47 generates a first disk blade processing path 181 that passes through a processing start point DP1 and a processing end point DP2 of the disk blade 133 and forms the first plane 261 and the second plane 262, and a second disk blade processing path 182 that passes through the processing start point DP1 and the processing end point DP2 and forms the third plane 263. The disk blade processing path 18A includes the first disk blade processing path 181 and the second disk blade processing path 182.

In the tool path generating step S104, the tool path generating unit 47 described above generates the tool path 17 including the disk blade processing path 18A. The tool path 17 is a movement route followed by a processing point E located at the tip of the processing tool 13, as illustrated in FIG. 8. The tool path 17 is configured by combining a plurality of the processing paths 18 which pass through the processing start point DP1 and the processing end point DP2 to perform processing by the processing tool 13 in the movement path from a start point DP3 to an end point DP4, and a movement path 19 which connects the end point DP4 of one processing path 18 and a start point of another processing path 18. In the embodiment illustrated in FIG. 8, in order to avoid contact between the processing object 20 and the processing tool 13 in the movement route from the end point DP4 to the start point DP3 of the processing path 18, the movement path 19 passes through points MP1 and MP2 where the processing point E is separated from the processing object 20 by a predetermined distance D or more.

The tool path generating unit 47 described above generates a processing path by a square chisel (square chisel processing path 18B) and a processing path by a vibration chisel (vibration chisel processing path 18C) for the disk blade unprocessable plane 27 (the fourth plane 271, the fifth plane 272, the sixth plane 273, and the seventh plane 274) determined to be unprocessable in the plane processing determining step S102. That is, when the processing objective region 22 includes the disk blade processing non-objective region 24, the processing path 18 includes the square chisel processing path 18B and the vibration chisel processing path 18C for forming the disk blade unprocessable plane 27. In the embodiment illustrated in FIGs. 8B and 8C, the tool path generating unit 47 generates the square chisel processing path 18B that passes through a square chisel processing start point HP1 that is a start point of processing by the square chisel 134 and an square chisel processing end point HP2 that is an end point of processing by the square chisel 134, as illustrated in FIG. 8B. Then, as illustrated in FIG. 8C, the tool path generating unit 47 generates a vibration chisel processing path 18C that passes through a vibration chisel processing start point VP1 that is a start point of processing by the vibration chisel 138 and the square chisel processing end point HP2 that is an end point of processing by the vibration chisel 138.

The plane processing determining unit 46 described above refers to the processing basic data 35 described above in the plane extracting step S101 and the plane processing determining step S102. The tool path generating unit 47 described above also refers to the processing basic data 35 described above in the disk blade processing path generating step S103 and the tool path generating step S104.

In the tool path generating step S104, the tool path generating unit 47 described above generates the optimum tool path 17 by combining the processing path 18 and the movement path 19 so that the finished product shape has a predetermined or higher quality and time required for processing the processing object 20 is minimized.

As described above, the tool path generating method 100 according to some embodiments includes, as illustrated in FIG. 5, the plane extracting step S101 described above, the plane processing determining step S102 described above, the disk blade processing path generating step S103 described above, and the tool path generating step S104 described above.

As described above, the present inventors have focused on the fact that it is easy to generate the processing path 18 (disk blade processing path 18A) for the disk blade 133 by limiting the processing by the disk blade 133 attached to the multi-axis processing machine 7 to the processing for forming the plane 25 (disk blade processable plane 26).

According to the above method, in the plane processing determining step S102, it is determined whether or not the plane 25 extracted from the processing objective region 22 in the plane extracting step S101 can be processed by the disk blade 133 attached to the multi-axis processing machine 7. The disk blade processable plane 26 which is a plane determined to be processable by the disk blade 133 is specified to be processed by the disk blade 133, and the processing path 18 for the disk blade 133 of the disk blade processable plane 26 is generated in the disk blade processing path generating step S103. In the tool path generating step S104, the tool path 17 including the processing path 18 for the disk blade 133 is generated by combining, for example, the processing path 18 (disk blade processing path 18A) for the disk blade 133 with the other processing paths 18 (the square chisel processing path 18B, the vibration chisel processing path 18C, and the like) and the movement path 19.

Here, processing by the disk blade 133 can be performed in a shorter period of time than the processing by other processing tools 13 such as milling by an end mill. The multi-axis processing machine 7 that performs processing according to the tool path 17 performs, by the disk blade 133, processing of a plane that can be processed by the disk blade 133 (the disk blade processable plane 26), and thus can improve the processing speed of the processing object 20 as a whole. Therefore, according to the above-described method, it is possible to generate the tool path 17 capable of improving the processing speed of the processing object 20 by the multi-axis processing machine 7.

FIG. 9 is a flowchart of a plane processing determining step in an embodiment. FIG. 10 is a diagram for explaining the plane processing determining step illustrated in FIG. 9. FIG. 10A is a diagram illustrating an example of being determined to be processable and FIG. 10B is a diagram illustrating an example of being determined to be unprocessable. FIG. 11 is a diagram for explaining a shape that can be processed by a disk blade as illustrating both a shape that can be processed by a disk blade and a shape that cannot be processed by a disk blade.

In some embodiments, in the above-described plane processing determining step S102, as illustrated in FIGs. 10A and 10B, it is determined that processing by the disk blade 133 is impossible when a semi-plane 16 on which a trajectory of the disk blade 133 is assumed and a boundary of which is a trajectory (first edge 161) of an outer peripheral edge (processing point E) of the disk blade 133 is in contact with the processing prohibited region 21, and it is determined that processing by the disk blade 133 is possible when the semi-plane 16 is not in contact with the processing prohibited region 21.

More specifically, in the above-described plane processing determining step S102, the determination as illustrated in FIG. 9 is performed. First, the semi-plane 16 having the first edge 161 as illustrated in FIGs. 10A and 10B is defined (step S111). In the embodiment illustrated in FIGs. 10A and 10B, the first edge 161 is defined as a straight line extending along the same direction as an edge constituting one side of the plane 25. In FIG. 10A, the first edge 161 extends along the same direction as an edge 252 constituting one side of a plane 251 (plane 25) extracted from the processing object 20 (20C), and having points E1 and E2 as both ends. In FIG. 10B, the first edge 161 extends along the same direction as an edge 256 constituting one side of a plane 255 (plane 25) extracted from the processing object 20 (20E), and having points E6 and E7 as both ends.

Next, an undetermined second edge is selected from second edges constituting sides of a target shape which is a shape of the processing object 20 after processing (step S112).

When both ends of the second edge selected in step S112 are located on the same side with respect to the semi-plane 16 ("YES" in step S113), as points E3, E4 located on both ends of an edge 253 illustrated in FIG. 10A, the selected second edge is determined not to interfere with the disk blade 133 (step S114). When both ends of the second edge selected in step S112 are located on the opposite sides with respect to the semi-plane 16 ("NO" in step S113), as points E3, E5 located on both ends of an edge 254 illustrated in FIG. 10A, it is checked whether an intersection point of the semi-plane 16 and the edge 254 (second edge) exists on the semi-plane 16 (step S115). When there is no intersection point on the semi-plane 16 as the edge 254 ("NO" in step S115), the selected second edge is determined not to interfere with the disk blade 133 (step S114). After step S114, when an undetermined second edge is present ("YES" in step S117), the determination is repeated until any undetermined second edge is no longer present. After step S114, when a second edge undetermined is not present ("NO" in step S117), the extracted plane 251 described above is determined to be capable of being processed by the disk blade 133 (step S118).

When both ends of the second edge selected in step S112 are located on the opposite sides with respect to the semi-plane 16 ("NO" in step S113) as points E8, E9 located on both ends of an edge 257 illustrated in FIG. 10B, and an intersection point IP of the semi-plane 16 and the edge 257 exists on the semi-plane 16 ("YES" in step S115) as the edge 257, it is determined that the extracted plane 255 described above cannot be processed by the disk blade 133 (step S116).

According to the determination in the plane processing determining step S102 described above, it is determined that processing objects 20E to 20H among the processing objects 20 (20B to 20H) illustrated in FIG. 11 cannot be processed by the disk blade 133. In addition, it is determined that the processing objects 20B to 20D can be processed. The processing object 20B is separated into the processing prohibited region 21 and the processing objective region 22 for cutting processing by the disk blade 133. Further, the processing object 20C is separated into the processing prohibited region 21 and the processing objective region 22 for seating processing by the disk blade 133. Further, the processing object 20D is separated into the processing prohibited region 21 and the processing objective region 22 for grooving processing by the disk blade 133.

When the semi-plane 16 on which a trajectory of the disk blade 133 is assumed is in contact with the processing prohibited region 21, the processing prohibited region 21 is processed by the disk blade 133, which is not appropriate processing. On the other hand, when the semi-plane 16 is not in contact with the processing prohibited region 21, the disk blade 133 can process the plane 25 extracted from the processing objective region 22 without damaging the processing prohibited region 21, which is appropriate processing. According to the above-described method, it is possible to easily determine whether or not the plane 25 extracted from the processing objective region 22 can be processed by the disk blade 133, based on whether or not the semi-plane 16 is in contact with the processing prohibited region 21.

In some embodiments, as illustrated in FIGs. 10A and 10B, the trajectory of the disk blade 133 described above is a trajectory formed when the disk blade 133 is moved along a direction intersecting a shaft of the disk blade 133 (an axial line AL of a rotary shaft 14). According to the method, owing to that movement (trajectory) of the disk blade 133 during processing is set to linear movement (trajectory) along a direction intersecting the axial line AL of the rotation shaft 14 of the disk blade 133, it is possible to simplify the shape of the semi-plane 16 on which the trajectory of the disk blade 133 is assumed. Accordingly, it is easy to determine whether or not the semi-plane 16 is in contact with the processing prohibited region 21. Further, by making the trajectory of the disk blade 133 simple, generating the processing path 18 for the disk blade 133 of the plane 25 is facilitated.

FIG. 12 is a flowchart of a tool path generating method according to an embodiment as the flowchart of the tool path generating method including a region dividing step and a processing model specifying step. FIG. 13 is a diagram for explaining a processing model as a schematic perspective view of a processing object on which a joint shape and a connection shape are formed.

In some embodiments, as illustrated in FIG. 12, the tool path generating method 100 described above further includes a region dividing step S201 of dividing the processing object 20 before processing into the processing prohibited region 21 and the processing objective region 22 based on at least two kinds of data out of before-processing shape data 32, after-processing shape data 33, and the processing shape data 34 stored in the storage unit 31. As illustrated in FIG. 2, the tool path generating unit 4 further includes a region dividing unit 45 (region dividing portion, region dividing function) capable of dividing the processing object 20 before processing into the processing prohibited region 21 and the processing objective region 22. The region dividing unit 45 may be a program 11 installed in the tool path generating unit 4, stored in the storage unit 42, and operated by the arithmetic unit 44. The program 11 may also be a program 11 that is stored in another unit of the tool path generating unit 4 and runs on the tool path generating unit 4 via the network 9. Further, the program 11 may be stored in the computer-readable recording medium 10 (see FIG. 2) such as an HDD or an SD card, the recording medium 10 being electrically connected to the tool path generating unit 4 via the input-output unit 41. In this case, even if one of the before-processing shape data 32, the after-processing shape data 33, and the processing shape data 34 is not stored in the storage unit 31, it is possible to execute the tool path generating method 100 described above.

In some embodiments, as illustrated in FIG. 12, the tool path generating method 100 described above further includes a processing model specifying step S301 of specifying one processing model out of a plurality of previously-prepared processing models based on at least two kinds of data out of the before-processing shape data 32, the after-processing shape data 33, and the processing shape data 34 stored in the storage unit 31. Then, in the tool path generating step S104 described above, the tool path 17 is generated in accordance with the processing procedure of the processing model specified in the processing model specifying step S301. The storage unit 31 of the database 3 stores processing model data 36 and tool path model data 37 associated with the processing model data 36, as illustrated in FIG. 2.

The processing model data 36 is model shape data of joint portions including a joint or a connection, such as joint portions 28 (28A to 281) in the processing object 20 (201 to 20N, 20P) illustrated in FIG. 13. The tool path model data 37 includes, for each model shape data of the joint portion, information such as the tool path 17 for generating the model shape, processing procedure, a feed speed of the processing tool for each processing procedure, and a moving speed of the multi-axis processing machine.

According to the above method, in the processing model specifying step S301, for example, the outer contour of the processing objective region 22 (processing shape) or the like is specified from the before-processing shape data 32, the after-processing shape data 33, and the processing shape data 34 of the processing object 20, and one processing model most similar to the processing shape can be specified from the plurality of processing models. By generating the tool path 17 according to the processing procedure of the processing model, it is not necessary to determine the processing procedure for each processing shape, and thus the tool path 17 can be easily generated.

In some embodiments, as illustrated in FIGs. 10A and 10B, according to the tool path generating method 100 described above, the plane 25A constituting the contour of the processing objective region 22 is extracted in the plane extracting step S101 described above. According to the above method, in the plane extracting step S101, the plane 25 to be extracted is limited to the plane 25A constituting the contour of the processing objective region 22, so that the extraction of the plane 25 in the plane extracting step S101 is facilitated. Accordingly, the generation of the processing path 18 by the disk blade 133 can be further facilitated.

In some embodiments, as illustrated in FIG. 3, in the tool path generating method 100 described above, the multi-axis processing machine 7 described above includes the multi-axis robot 7A having six or more rotational axes (rotational axes 701 to 706). Since the disk blade 133 attached to the multi-axis robot 7A having six or more rotational axes (rotational axes 701 to 706) has a high degree of freedom, it is difficult to generate the processing path 18 by the disk blade 133 and the tool path 17 including the processing path 18. According to the above method, as described above, the processing by the disk blade 133 attached to the multi-axis robot 7A is limited to the processing for forming the plane 25, so that the processing path 18 of the disk blade 133 and the tool path 17 including the processing path 18 can be easily generated.

As described above, the tool path generating unit 4 according to some embodiments includes the above-described plane processing determining unit 46 (plane processing determining portion), and the tool path generating unit 47 (tool path generating portion) described above.

According to the above configuration, the tool path generating unit 4 determines, by the plane processing determining unit 46 (plane processing determining portion), whether or not the plane 25 included in the processing objective region 22 can be processed by the disk blade 133 attached to the multi-axis processing machine 7. The tool path generating unit 47 (tool path generating portion) specifies that the disk blade processable plane 26, which is a plane determined to be processable by the disk blade 133, is to be processed by the disk blade 133, and generates the processing path 18 for the disk blade 133 of the disk blade processable plane 26. Then, the tool path generating unit 47 (tool path generating portion) generates the tool path 17 including the processing path 18 for the disk blade 133.

The multi-axis processing machine 7 that performs processing according to the tool path 17 performs, by the disk blade 133, processing of a plane that can be processed by the disk blade 133 (the disk blade processable plane 26), and thus can improve the processing speed of the processing object 20 as a whole. Therefore, according to the above configuration, the tool path generating unit 4 can generate the tool path 17 capable of improving the processing speed of the processing object 20 by the multi-axis processing machine 7.

As described above, the computer-readable recording medium 10 storing the program 11 according to some embodiments causes the tool path generating unit 4 (computer) to execute the plane processing determining function being the function of the plane processing determining unit 46 and the tool path generating function being the function of the tool path generating unit 47.

According to the above configuration, the tool path generating unit 4 (computer) that has read the program 11 from the recording medium 10 determines, with the plane processing determining function, whether or not the plane 25 included in the processing objective region 22 can be processed by the disk blade 133 attached to the multi-axis processing machine 7. Then, the tool path generating unit 4 (computer) specifies that the disk blade processable plane 26 determined to be processable by the disk blade 133 is to be processed by the disk blade 133 and generates the processing path 18 of the disk blade processable plane 26 by the disk blade 133, with the tool path generating function. Further, the tool path generating unit 4 (computer) generates the tool path 17 including the processing path 18 for the disk blade 133 with the tool path generating function.

The multi-axis processing machine 7 for performing processing according to the tool path 17 performs, by the disk blade 133, processing of the plane that can be processed by the disk blade 133 (the disk blade processable plane 26), and thus can improve the processing speed of the processing object 20 as a whole. Therefore, according to the above configuration, the tool path generating unit 4 (computer) that has read the program 11 from the recording medium 10 can generate the tool path 17 capable of improving the processing speed of the processing object 20 by the multi-axis processing machine 7.

As described above, the program 11 according to some embodiments causes the tool path generating unit 4 (computer) to execute the plane processing determining function being a function by the plane processing determining unit 46 described above and the tool path generating function being a function by the tool path generating unit 47 described above.

According to the above configuration, the tool path generating unit 4 (computer) that has read the program 11 determines, with the plane processing determining function, whether or not the plane 25 included in the processing objective region 22 can be processed by the disk blade 133 attached to the multi-axis processing machine 7. Then, the tool path generating unit 4 (computer) specifies that the disk blade processable plane 26 determined to be processable by the disk blade 133 is to be processed by the disk blade 133 and generates the processing path 18 of the disk blade processable plane 26 by the disk blade 133, with the tool path generating function. Further, the tool path generating unit 4 (computer) generates the tool path 17 including the processing path 18 for the disk blade 133 with the tool path generating function.

The multi-axis processing machine 7 for performing processing according to the tool path 17 performs processing of the plane that can be processed by the disk blade 133(the disk blade processable plane 26) by the disk blade 133, and thus can improve the processing speed of the processing object 20 as a whole. Therefore, according to the above configuration, the tool path generating unit 4(computer) that has read the program 11 can generate the tool path 17 capable of improving processing speed of the processing object 20 by the multi-axis processing machine 7.

Not limited to the embodiments described above, the present invention includes modifications of the embodiments and appropriate combinations thereof.

### Reference Signs List

| | | | |
|---|---|---|---|
| 1 | Processing system | 41 | Input-output unit |
| 2 | CAD device | 42 | Storage unit |
| 3 | Database | 43 | Display unit |
| 4 | Tool path generating unit | 44 | Arithmetic unit |
| 4A | CAM device | 45 | Region dividing unit |
| 6, 6A, 6B | Post-processor | 46 | Plane processing determining unit |
| 7 | Multi-axis processing machine | | |
| 8 | Simulation device | 47 | Tool path generating unit |
| 9 | Network | 100 | Tool path generating method |
| 10 | Recording medium | 133 | Disk blade |
| 11 | Program | | |
| 12 | Installation surface | | |
| 13 | Processing tool | | |
| 130, 130A to 130D | Processing Unit | | |
| 14 | Rotary shaft | | |
| 20 | Processing object | | |
| 21 | Processing prohibited region | | |
| 22 | Processing objective region | | |
| 23 | Disk blade processing objective region | | |
| 24 | Disk blade processing non-objective region | | |
| 25 | Plane | | |
| 26 | Disk blade processable plane | | |
| 27 | Disk blade unprocessable plane | | |
| 28 | Joint portion | | |
| 31 | Storage unit | | |
| 32 | Before-processing shape data | | |
| 33 | After-processing shape data | | |
| 34 | Processing shape data | | |
| 36 | Processing model data | | |
| 37 | Tool path model data | | |

## Claims

1. A tool path generating method for processing wood as a processing object by a multi-axis processing machine, comprising:
a plane extracting step of extracting at least one plane included in a processing objective region being a region at which the processing object is processable;
a plane processing determining step of determining whether or not the plane extracted in the plane extracting step is processable by a disk blade attached to the multi-axis processing machine;
a disk blade processing path generating step of generating a processing path for the disk blade on the plane determined as being processable in the plane processing determining step; and
a tool path generating step of generating a tool path including the processing path for the disk blade.

2. The tool path generating method according to claim 1, wherein, in the plane processing determining step, the disk blade is determined to be incapable of performing processing when a semi-plane on which a trajectory of the disk blade is assumed and a boundary of which is a trajectory of an outer peripheral edge of the disk blade is in contact with a processing prohibited region in which processing of the processing object is prohibited, and the disk blade is determined to be capable of performing processing when the semi-plane is not in contact with the processing prohibited region.

3. The tool path generating method according to claim 2, wherein the trajectory of the disk blade includes a trajectory formed when the disk blade is moved along a direction intersecting an axis of the disk blade.

4. The tool path generating method according to any one of claims 1 to 3, further comprising a processing model specifying step of specifying one processing model out of a plurality of previously-prepared processing models based on at least two kinds of data out of shape data of the processing object before processing, shape data of the processing object after processing, and processing shape data being difference between the shape data after processing and the shape data before processing,
wherein, in the tool path generating step, the tool path is generated in accordance with processing procedure of the processing model specified in the processing model specifying step.

5. The tool path generating method according to any one of claims 1 to 4, wherein the plane defining an outline of the processing objective region is extracted in the plane extracting step.

6. The tool path generating method according to any one of claims 1 to 5, wherein the multi-axis processing machine includes a multi-axis robot having six or more rotational axes.

7. A tool path generating unit for processing wood as a processing object by a multi-axis processing machine, comprising:
a plane processing determining portion determining whether or not at least one plane included in a processing objective region being a region at which the processing object is processable is processable by a disk blade attached to the multi-axis processing machine; and
a tool path generating portion generating a processing path for the disk blade and generating a tool path including the processing path for the disk blade on the plane determined as being processable by the plane processing determining portion.

8. A computer-readable recording medium storing a program for generating a tool path for processing wood as a processing object by a multi-axis processing machine, the program causing a computer to execute:
a plane processing determining function of determining whether or not at least one plane included in a processing objective region being a region at which the processing object is processable is processable by a disk blade attached to the multi-axis processing machine; and
a tool path generating function of generating a processing path for the disk blade and generating a tool path including the processing path for the disk blade on the plane determined as being processable by the plane processing determining function.

9. A program for generating a tool path for processing wood as a processing object by a multi-axis processing machine, the program causing a computer to execute:
a plane processing determining function of determining whether or not at least one plane included in a processing objective region being a region at which the processing object is processable is processable by a disk blade attached to the multi-axis processing machine; and
a tool path generating function of generating a processing path for the disk blade and generating a tool path including the processing path for the disk blade on the plane determined as being processable by the plane processing determining function.
